# EUROPÄISCHE PATENTSCHRIFT

(11) **EP 1 928 682 B1**
(45) Veröffentlichungstag und Bekanntmachung des Hinweises auf die Patenterteilung: **11.09.2013**
(21) Anmeldenummer: 06805751.2
(22) Anmeldetag: 18.09.2006
(51) Int. Cl.: B60K 11/04, F01P 5/06, F01P 11/10, F01P 7/10

(54) **ANORDNUNG ZUR KÜHLUNG EINER BRENNKRAFTMASCHINE EINES KRAFTFAHRZEUGES, INSBESONDERE KÜHLMODUL**
ARRANGEMENT FOR COOLING AN INTERNAL COMBUSTION ENGINE OF A MOTOR VEHICLE, IN PARTICULAR COOLING MODULE
SYSTEME POUR REFROIDIR UN MOTEUR A COMBUSTION D'UN VEHICULE AUTOMOBILE, EN PARTICULIER MODULE DE REFROIDISSEMENT

(30) Priorität: 17.09.2005 DE 102005044559
(43) Veröffentlichungstag der Anmeldung: 11.06.2008
(73) Patentinhaber: Behr GmbH & Co. KG, 70469 Stuttgart (DE)
(72) Erfinder: HARICH, Martin, 25436 Heidegraben (DE); PANTOW, Eberhard, 71696 Möglingen (DE); VOLLERT, Ulrich, 70567 Stuttgart (DE)
(74) Vertreter: Grauel, Andreas
(86) Internationale Anmeldenummer: PCT/EP2006/009057
(87) Internationale Veröffentlichungsnummer: WO 2007/031344

(56) Entgegenhaltungen:
- FR-A1- 2 347 534
- GB-A- 2 131 150
- JP-A- 4 163 230
- US-A- 3 777 808

## Beschreibung

Die Erfindung betrifft eine Anordnung zur Kühlung einer Brennkraftmaschine eines Kraftfahrzeuges, insbesondere ein Kühlmodul nach dem Oberbegriff des Patentanspruches 1.

Kühlmodule sind bekannt - es handelt sich dabei um vormontierte Baueinheiten, welche vorzugsweise im vorderen Motorraum eines Kraftfahrzeuges angeordnet und befestigt werden. Die Baueinheit bzw. das Kühlmodul umfasst diverse Kühlkomponenten sowie Komponenten einer Klimaanlage, u. a. verschiedene Wärmeübertrager wie Kühlmittelkühler, Ladeluftkühler, Ölkühler oder Kältemittelkondensatoren. Darüber hinaus kann auch ein oder mehrere Kühlluftgebläse, bestehend aus Lüfter und Antriebsmotor, Bestandteil des Kühlmoduls sein. Alle Kühlkomponenten werden durch ein rahmenartiges Gebilde, einen so genannten Modulträger zusammengehalten und im Fahrzeug abgestützt. Sämtliche Wärmeübertrager werden durch einen Kühlluftstrom, d. h. Umgebungsluft gekühlt, welcher durch Staudruck oder durch das Kühlluftgebläse erzeugt wird. Der das Kühlmodul durchströmende Luftstrom erzeugt einen Luftwiderstand, welcher den c_{w}-Wert des Fahrzeuges erhöht. Je nach Anordnung der Wärmeübertrager im Kühlmodul werden diese unterschiedlich stark vom Kühlluftstrom beaufschlagt, was nicht immer den Anforderungen an den jeweiligen Kühlbedarf entspricht. Der Kühlbedarf für die einzelnen Wärmeübertrager ist sehr unterschiedlich und hängt von den jeweiligen Belastungszuständen ab. Die Regelung des Kühlbedarfs erfolgt üblicherweise durch eine Reglung der Fluidströme in den Wärmeübertragem, während der Luftmassenstrom (Durchsatz) in der Regel nicht verändert oder an den jeweiligen Kühlbedarf der einzelnen Wärmeübertrager angepasst wird.

Durch die EP 1 431 698 A2 ist es bekannt, den Luftmassenstrom insgesamt zu regeln, wobei im Luftstrom eine Jalousie angeordnet ist, welche sich über den gesamten Luftströmungsquerschnitt erstreckt. Eine solche Jalousie kann auch zur Steuerung eines Kühlluftstromes durch den Motorraum zur Kühlung von Motor und Getriebe eingesetzt werden.

Durch die DE 197 19 792 B4 der Anmelderin wurden ein Verfahren und eine Vorrichtung zur Regulierung der Kühlmitteltemperatur in einem Kraftfahrzeug bekannt, wobei ebenfalls eine Jalousie im Kühlluftstrom angeordnet ist, welche den Durchsatz des gesamten Kühlluftstromes bestimmt, der vom Staudruck abgezweigt wird. Der Anteil der Entnahme der Kühlluftströmung aus der Stauluft beeinflusst den Fahrzeugwiderstand: Je mehr die Jalousie geöffnet wird, umso stärker erhöht sich der Luftwiderstand, was den Gesamtenergieverbrauch erhöht.

Jalousien sind in verschiedenen Formen und unterschiedlichen Anordnungen bekannt, z. B. als Klappen- oder Lamellenjalousien, welche durch die DE 196 52 398 A1 und die DE 197 15 352 A1 der Anmelderin bekannt wurden. Ferner sind so genannte Wickeljalousien bekannt, bei welchen durch ein auf- und abwickelbares Tuch die Kühler- und/oder die Kondensatorstirnfläche abdeckbar ist (DE 35 22 591 A1 der Anmelderin). Jalousien werden auch zur Geräuschdämmung verwendet.

Aus der Druckschrift FR 2 347 534 A1 ist eine Anordnung zur Kühlung einer Brennkraftmaschine bekannt, die eine Luftleiteinrichtung zur Luftführung, mindestens einen Wärmeübertrager, eine Luftfördereinrichtung und einen im Luftstrom angeordneten Lüfter zur Regelung des Luftmassenstroms aufweist. Der Luftmassenstrom ist dabei mindestens in einem Teilquerschnitt des Gesamtströmungsquerschnittes durch den Lüfter im Luftmassenstrom regelbar. Die Luftleiteinrichtung ist dabei eine Zarge mit einem variablen Ansaugquerschnitt. Der Ansaugquerschnitt kann dabei beispielsweise über eine Klappe, welche schwenkbar in der Rückwand der Zarge angeordnet sein kann, variiert werden. Auch können zwei Klappen in der Zarge angeordnet sein, die gleichzeitig verschwenkbar sind.

Nachteilig bei den bekannten Lösungen ist, dass jeweils nur der gesamte Luftstrom regelbar ist, der alle Wärmeübertrager des Kühlmoduls beaufschlagt.

Es ist Aufgabe der Erfindung, eine Anordnung zur Kühlung der eingangs genannten Art dahingehend zu verbessern, dass eine differenzierte Regelung des Luftmassenstromes, insbesondere eine Luftstromregelung für einzeine Wärmeübertrager des Kühlmoduls möglich sowie eine Anpassung an den veränderlichen Staudruck erreichbar ist.

Diese Aufgabe wird zunächst durch die Merkmale des Patentanspruches 1 gelöst. Vorteilhafte Ausgestaltungen der Erfindung ergeben sich aus den Unteransprüchen.

Erfindungsgemäß ist zunächst vorgesehen, dass die im Luftstrom angeordnete Jalousie nur einen Teilquerschnitt regelt, d. h. einen Teilluftstrom. Damit ist es möglich, den Luftdurchsatz gezielt für einzelne Wärmeübertrager oder einen bestimmten Wärmeübertrager zu regeln. Damit wird der Vorteil einer verbesserten Leistungsregelung für die einzelnen Wärmeübertrager des Kühlmoduls erreicht, weil zusätzlich zur Regelung des Fluidstroms, d. h. des zu kühlenden Mediums, auch das kühlende Medium selbst, die Kühlluft, regelbar ist. Dies kann je nach Ausbildung der Jalousie in Stufen oder stufenlos erfolgen von voll geöffnet bis voll geschlossen, so dass es z. B. möglich ist, ausgewählte Wärmeübertrager in bestimmten Betriebszuständen überhaupt nicht mehr mit Kühlluft zu beaufschlagen. Damit wird z. B. verhindert, dass der betreffende Wärmeübertrager nicht unter- oder ausgekühlt wird. Vorteilhafterweise kann die Jalousie in Luftströmungsrichtung gesehen sowohl vor als auch hinter dem oder den Wärmeübertragern angeordnet sein. Dabei kann weiterhin vorgesehen sein, dass im Luftstrom eine Trennwand (in Luftströmungsrichtung) angeordnet ist, welche einen oder mehrere Teilluftströme abteilt, die bestimmten Wärmeübertragern zugeordnet sind. Diese Teilluftströme werden über eine oder eine mehrteilige Jalousie in ihrem Durchsatz geregelt.

Erfindungsgemäß ist weiterhin eine Zarge mit variabler Geometrie vorgesehen, d. h. mit einem veränderlichen Ansaugquerschnitt für den Lüfter und mit veränderlichem Querschnitt für Stauluftöffnungen. Die Veränderung des Ansaugquerschnittes wird vorzugsweise durch eine oder mehrere schwenkbare Klappen erreicht, welche insbesondere gleichzeitig die Stauluftöffnungen kontrollieren. Durch diese variable Geometrie der Zarge wird einerseits eine Anpassung des Arbeitspunktes des Lüfters an die verschiedenen Betriebsbedingungen wie Leerlauf, Bergfahrt und Schnellfahrt erreicht und andererseits eine Erhöhung des Gesamtluftmassenstromes erzielt. Der Lüfter arbeitet somit mit höherem Wirkungsgrad und die Kühlleistung des Kühlmoduls wird verbessert.

Vorteilhaft ist, dass die Zarge mindestens eine Klappe zur Verstellung des Ansaugquerschnittes aufweist.

Vorteilhaft ist, dass die mindestens eine Klappe schwenkbar in der Rückwand der Zarge angeordnet ist.

Vorteilhaft ist, dass mindestens zwei Klappen vorgesehen sind, die unabhängig voneinander, insbesondere nacheinander verschwenkbar sind.

Vorteilhaft ist, dass die mindestens eine Klappe als Faltklappe ausgebildet und in die Rückwand der Zarge integriert ist.

Vorteilhaft ist, dass die Zarge eine faltbare Rückwand mit einem verschiebbaren Trenn- und Dichtelement aufweist, welches den Ansaugquerschnitt begrenzt und den Ansaugstrom abdichtet.

Nach einer vorteilhaften Ausgestaltung der Erfindung können der Lüfter zur Förderung der Kühlluft und die Jalousie jeweils hinter den Wärmeübertragern und in einer Zarge angeordnet sein, welche an das Kühlmodul anschließt. In weiterer vorteilhafter Ausgestaltung der Erfindung kann dann zwischen Lüfter und Jalousie eine Schwenkklappe zur Trennung der Luftströme bzw. zur Abschottung eines Luftstromes vorgesehen sein. Damit wird der Vorteil erreicht, dass der Luftstrom einerseits bei geschlossener Jalousie gedrosselt und andererseits bei geschlossener Jalousie und ausgeschwenkter Trennklappe völlig unterbunden wird. Eine solche Lösung ist beispielsweise für einen Kühlmittelkühler bei niedrigen Außentemperaturen vorteilhaft, da damit ein Auskühlen des Kühlers vermieden wird. Damit ist es auch nicht mehr erforderlich, den Fluid- bzw. Kühlmitteldurchsatz im Wärmeübertrager bzw. Kühlmittelkühler bei reduziertem Kühlbedarf zu reduzieren bzw. in starkem Maße zu reduzieren. Schließlich ergibt sich bei gedrosselter oder geschlossener Jalousie der Vorteil eines verringerten Fahrzeugwiderstandes, was den Kraftstoffverbrauch verringert.

In vorteilhafter Ausgestaltung der Erfindung kann die Veränderung des Ansaugquerschnittes stufenweise, vorzugsweise mittels Klappen oder stufenlos, vorzugsweise mit einer Faltklappe oder einer faltbaren Zargenrückwand erfolgen.

Die Klappe oder Klappen sind vorzugsweise horizontal, vertikal, schräg oder bogenförmig und vorzugsweise um eine Lüfteröffnung in der Zarge verteilt angeordnet, wobei die Lüfteröffnung in allen Fällen mittig oder außermittig in der insbesondere rechteckigen Zarge angeordnet ist.

Vorteilhaft ist, dass die mindestens eine Klappe in den äußeren Bereichen der Zargenrückwand angeordnet ist.

Vorteilhaft ist, dass der vom Lüfter hinter den Wärmeübertragern ansaugbare Luftstrom durch die mindestens eine Klappe gegenüber den Wärmeübertragern abdichtbar ist.

Ausführungsbeispiele der Erfindung sind in der Zeichnung dargestellt und werden im Folgenden näher beschrieben. Es zeigen
- Fig. 1: ein nicht erfindungsgemäßes Kühlmodul mit Jalousie in einer ersten Stellung (Jalousie geöffnet),
- Fig. 2: das Kühlmodul in einer zweiten Stellung (Jalousie geschlossen),
- Fig. 3: das Kühlmodul in einer dritten Stellung (Jalousie geschlossen und Klappe in Sperrposition),
- Fig. 4: das Kühlmodul in einer vierten Stellung (Jalousie geöffnet und Klappe in Trennposition),
- Fig. 5: ein nicht erfindungsgemäßes Külhmodul mit variabler Zargengeometrie (erste Stellung),
- Fig. 6: das Kühlmodul gemäß Fig. 5 in einer zweiten Stellung,
- Fig. 7: das Kühlmodul gemäß Fig. 5 in einer dritten Stellung,
- Fig. 8: das Kühlmodul gemäß Fig. 5 in einer vierten Stellung,
- Fig. 9: ein nicht erfindungsgemäßes Beispiel für ein Kühlmodul mit variabler Zargengeometrie (erste Stellung),
- Fig. 10: das Kühlmodul gemäß Fig. 9 in einer zweiten Stellung,
- Fig. 11: das Kühlmodul gemäß Fig 9 in einer dritten Stellung,
- Fig. 12: ein nicht erfindungsgemäßes Beispiel für ein Kühlmodul mit variabler Zargengeometrie,
- Fig. 13: ein Beispiel für ein Kühlmodul mit Faltklappe,
- Fig. 14: ein weiteres Ausführungsbeispiel für ein Kühlmodul mit faltbarer Zargenrückwand,
- Fig. 15, 15a, 15b: Lüfter- und Widerstandskennlinien nach dem Stand der Technik und
- Fig. 15c: Lüfter- und Widerstandskennlinien für das erfindungsgemäße Kühlmodul mit variabler Zargengeometrie.

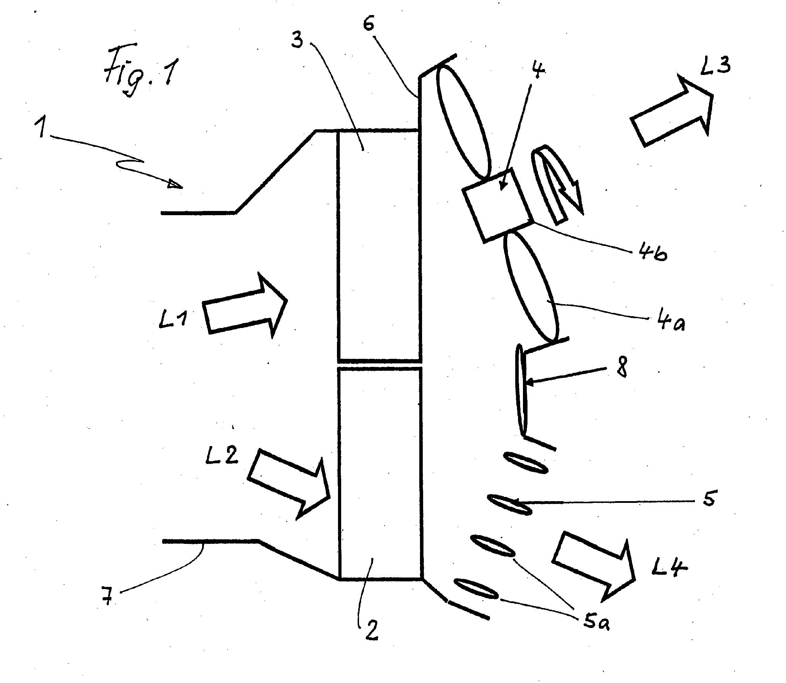

**Fig. 1** zeigt ein Kühlmodul 1, welches einen Kühlmittelkühler 2 und einen Ladeluftkühler 3, ein Kühlluftgebläse 4 sowie eine Jalousie 5 umfasst. Die Kühlkomponenten 2, 3, 4, 5 werden von einem nur schematisch dargestellten Rahmen bzw. einer Zarge 6 aufgenommen, welche auch das Kühlluftgebläse 4, bestehend aus einem Lüfter 4a und einem Elektromotor 4b, sowie die Jalousie 5 aufnimmt, welche hier als Klappenjalousie, bestehend aus einzelnen Klappen oder Lamellen 5a ausgebildet ist. Kühlmittelkühler 2 und Ladeluftkühler 3 werden von Kühlluft, dargestellt durch die Pfeile L1, L2 angeströmt; sie sind in Luftströmungsrichtung nebeneinander bzw. übereinander angeordnet und werden daher parallel vom Luftstrom beaufschlagt. Der Luftstrom wird über eine Luftleiteinrichtung 7 in Form eines Luftströmungskanals zugeführt, wobei das gesamte Kühlmodul 1 im nicht dargestellten vorderen Motorraum eines Kraftfahrzeuges angeordnet ist. Zwischen dem Kühlluftgebläse 4 und der Jalousie 5 ist eine schwenkbare Klappe 8 angeordnet, welche auf nicht dargestellte Weise an der Zarge 6 befestigt sein kann.

Bei der dargestellten Position von geöffneter Jalousie 5 und senkrecht angeordneter Klappe 8 kann ein maximaler Luftmassenstrom, hervorgerufen durch Staudruck bei Schnellfahrt des Kraftfahrzeuges, das Kühlmodul, insbesondere den Kühlmittelkühler 2 und den Ladeluftkühler 3 durchströmen. Der den Kühlmittelkühler 2 durchströmende Luftstrom L2 tritt als Luftstrom L4 aus der Jalousie 5 aus, und der den Ladeluftkühler 3 durchströmende Luftstrom L1 tritt als Luftstrom L3 hinter dem Lüfter 4a aus, wobei aufgrund von möglichen Ausgleichsströmen an der senkrecht angeordneten Klappe 8 vorbei nicht notwendigerweise der jeweilige Luftmassenstrom erhalten (L2=L4 und L1=L3) sein muss. Somit ist bei ausgeschaltetem Lüfter eine maximale Kühlwirkung für beide Wärmeübertrager erzielbar.

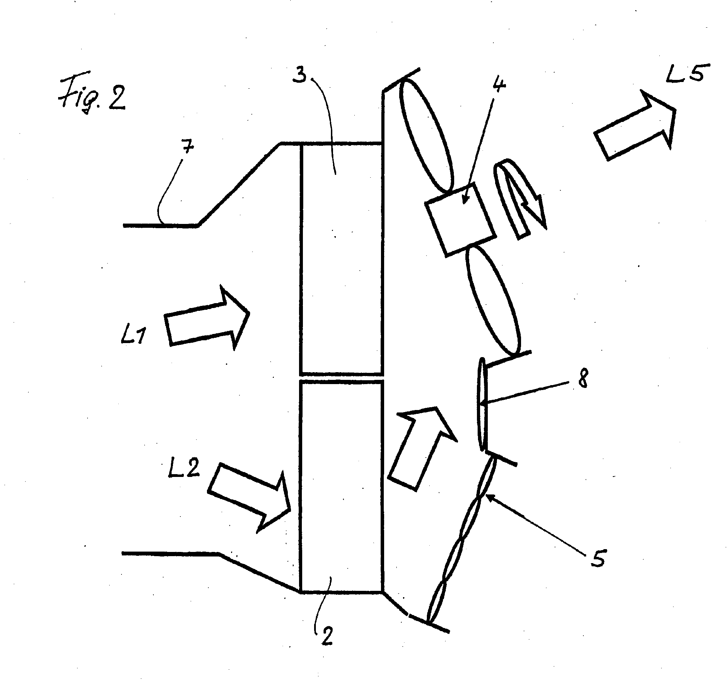

**Fig. 2** zeigt das Kühlmodul 1 gemäß Fig. 1 mit geschlossener Jalousie 5. Für gleiche Teile werden gleiche Bezugszahlen verwendet. Der Gesamtluftstrom, welcher in die Luftleiteinrichtung 7 eintritt, teilt sich in einen Teilluftstrom L1, der den Ladeluftkühler 3 durchströmt, und einen Teilstrom L2, welcher den Kühlmittelkühler 2 durchströmt. Der aus dem Kühlmittelkühler 2 austretende Luftstrom L2 wird infolge der geschlossenen Jalousie 5 nach oben umgelenkt und durch den Lüfter 4a als Teil des Luftstroms L5 nach außen gefördert. Der Massenstrom L5 entspricht der Summe der Teilluftströme L1 und L2. In dieser Position kann ein maximaler Luftmassenstrom L5 bei Betrieb des Lüfters 4a ohne Staudruckunterstützung erzielt werden, wobei der Luftaüstrittsquerschnitt infolge der geschlossenen Jalousie 5 reduziert ist.

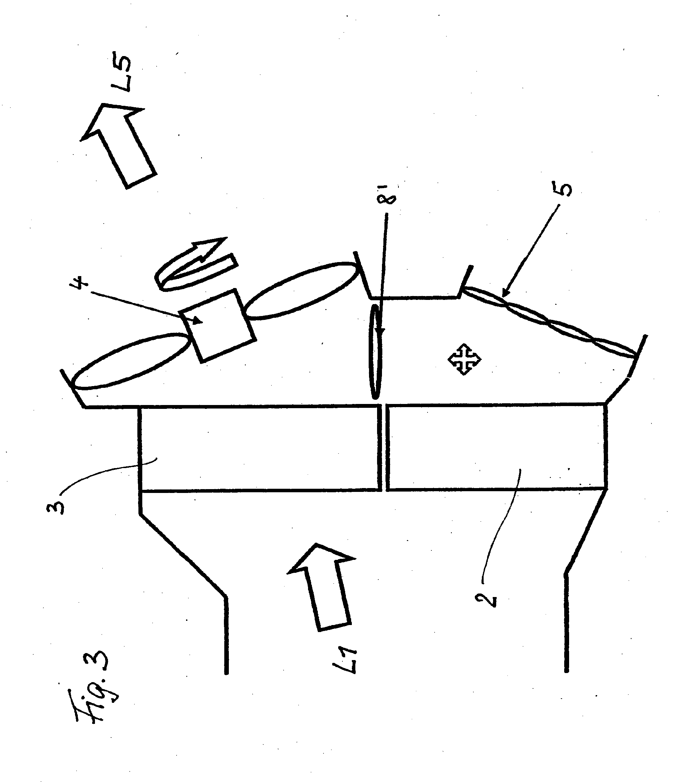

**Fig. 3** zeigt das Kühlmodul 1 mit geschlossener Jalousie 5 und waagerecht angeordneter Klappe 8'. Der Luftstrom, welcher das Kühlmodul 1 durchsetzt, ist durch einen Eintrittspfeil L1 und durch einen Austrittspfeil L5 dargestellt, wobei lediglich der Ladeluftkühler 3 von Luft durchströmt wird. Der Kühlmittelkühler 2 ist luftseitig durch die als Trennwand wirkende Klappe 8' abgeschottet, bei gleichzeitig geschlossener Jalousie 5, so dass keine Durchströmung mit Kühlluft möglich ist. Die in der Zeichnung waagerecht dargestellte Klappenposition 8' liegt auf Höhe der Trennfuge zwischen Kühlmittelkühler 2 und Ladeluftkühler 3 und leitet somit den austretenden Ladeluftstrom durch den Lüfter 4a. Die dargestellte Position ist insbesondere bei mangelndem Kühlbedarf des Kühlmittelkühlers 2, also beispielsweise bei niedrigen Außentemperaturen von Vorteil. Ein Auskühlen des Kühlmittelkühlers und eine zu starke Absenkung der Kühlmitteltemperatur werden dadurch verhindert.

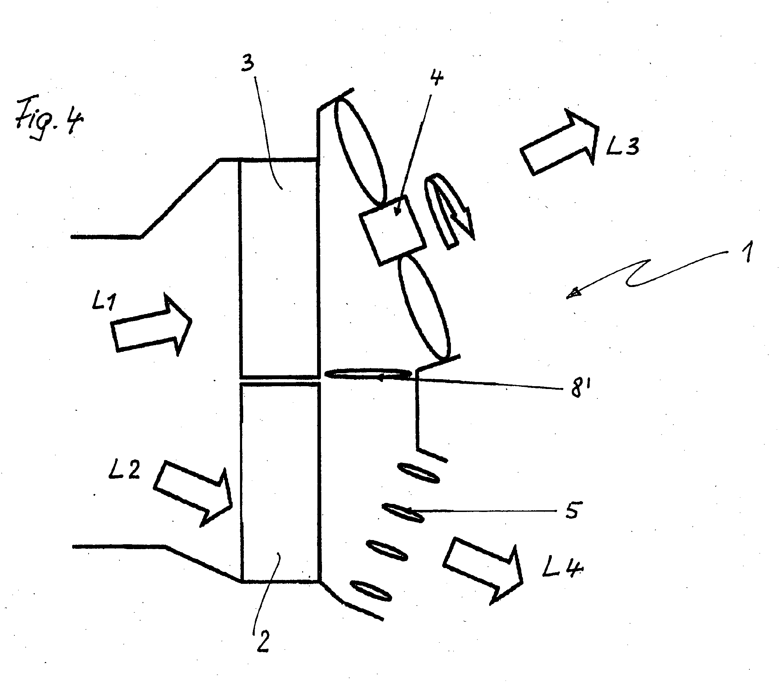

**Fig. 4** zeigt das Kühlmodul 1 mit waagerecht angeordneter Klappe 8' und geöffneter Jalousie 5. Durch diese Konfiguration erfolgt eine strikte Trennung der beiden eintretenden Luftströme L1, L2 in einen Lüfteraustrittsstrom L3 und einen aus der Jalousie 5 austretenden Luftstrom L4. Die Kühlung des Kühlmittelkühlers 2 wird somit durch die Fahrzeuggeschwindigkeit bzw. den Staudruck bestimmt, während die Kühlung des Ladeluftkühlers 3 durch den vom Lüfter 4a geförderten und durch Staudruck unterstützen Luftstrom L3 bestimmt ist.

Das in den Zeichnungen dargestellte Kühlmodul ist ein Beispiel - Abwandlungen sind möglich. Beispielsweise können zusätzliche oder andere Wärmeübertrager vorgesehen sein. Darüber hinaus kann die Jalousie in Luftströmungsrichtung vor den Wärmeübertragern angeordnet sein. Weiterhin kann die Klappe 8 als Trennwand in Luftströmungsrichtung vor den Wärmeübertragern angeordnet sein und den Gesamtluftstrom in Teilluftströme oder Strömungspfade aufteilen, die den einzelnen Wärmeübertragern zugeordnet sind. Auch damit lässt sich eine gezielte Regelung des Luftmassenstromes für einzelne Wärmeübertrager, also selektiv durchführen.

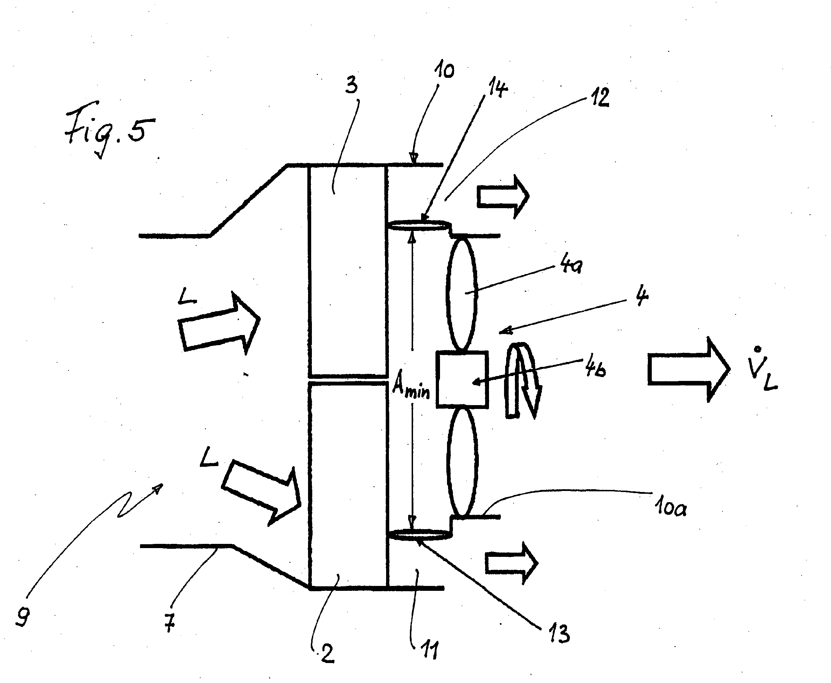

**Fig. 5** zeigt ein Beispiel für ein Kühlmodul 9 mit einer Luftleiteinrichtung 7 für den Eintritt von Kühlluft, einem Kühlmittelkühler 2 und einem Ladeluftkühler 3, die über- bzw. nebeneinander angeordnet und parallel vom Luftstrom, dargestellt durch die Pfeile L, beaufschlagt werden. Die beiden Wärmeübertrager 2, 3 sind in einer Zarge 10 mit variabler Geometrie aufgenommen und befestigt. Die Zarge 10 weist eine Rückwand 10a auf, die das Kühlgebläse 4, bestehend aus Lüfter 4a und Motor 4b, aufnimmt. In der Rückwand 10a sind außerhalb des Querschnittes des Lüfters 4a zwei Stauluftöffnungen 11, 12 angeordnet, welche durch schwenkbare Klappen 13, 14 kontrollierbar sind. In der dargestellten Position der Klappen 13, 14, d. h. in waagerechter Stellung bzw. in Luftströmungsrichtung sind beide Stauluftöffnungen 11, 12 geöffnet, so dass aus beiden Öffnungen 11, 12 jeweils ein Luftmassenstrom V_{K} austritt, welcher durch den vor den Wärmeübertragern 2, 3 herrschenden Staudruck bestimmt ist. Der Ansaugquerschnitt des Lüfters 4a ist durch diese Klappenstellung auf ein Minimum Aₘᵢₙ reduziert. Der vom Lüfter 4a geförderte, innerhalb der Klappen 13, 14 angesaugte Luftmassenstrom ist durch einen Pfeil V _{L} dargestellt. Die dargestellte Konfiguration ist vorteilhaft bei Schnellfahrt des Kraftfahrzeuges und lässt einen maximalen Massenstrom durch beide Wärmeübertrager 2, 3 bzw. das Kühlmodul zu, wobei sich der Lüfter 4a im Arbeitspunkt befindet, d. h. er kann dem von ihm angesaugten und geförderten Luftstrom eine hydraulische Energie zuführen. Dies bedeutet unter Umständen einen hohen Wirkungsgrad.

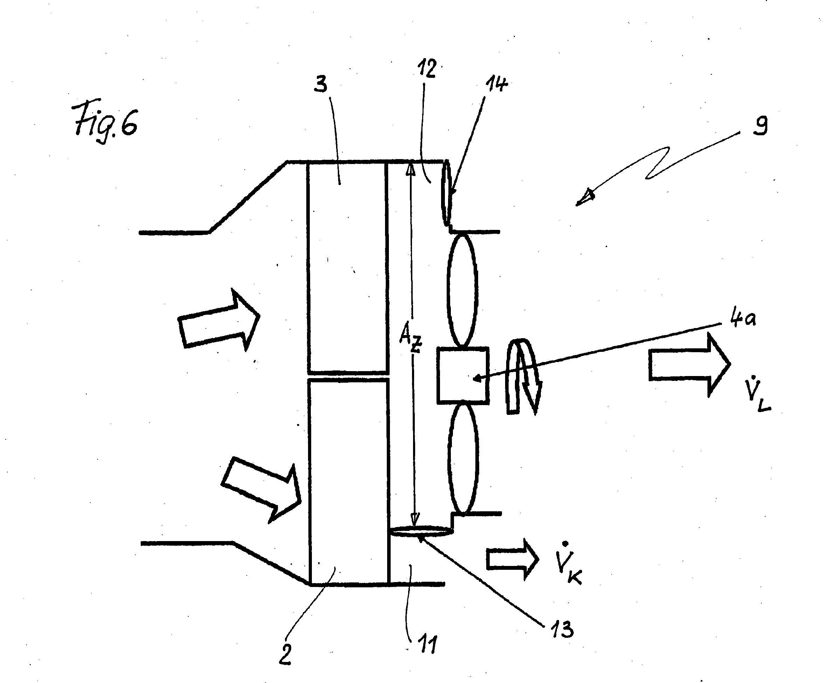

**Fig. 6** zeigt das Kühlmodul 9 gemäß Fig. 5 mit einer veränderten Klappenstellung: die obere Klappe 14 ist in eine in der Zeichnung vertikale Stellung verschwenkt und verschließt somit die obere Stauluftöffnung 12. Die untere Klappe 13 dagegen befindet sich in einer horizontalen Stellung und gibt somit die Stauluftöffnung 11 frei, aus welcher ein Luftmassenstrom V_{K} austritt. Der Ansaugquerschnitt des Lüfters 4a ist somit auf einen Zwischenquerschnitt A_{z} reduziert bzw. gegenüber dem Querschnitt Aₘᵢₙ gemäß Fig. 5 erweitert. Diese Klappenkonfiguration ist für Bergfahrt vorteilhaft, wobei ein maximaler Massenstrom durch den Ladeluftkühler 3 gefördert wird. Der Lüfter 4a befindet sich auch hier in seinem Arbeitspunkt und kann ein Druckgefälle aufbauen.

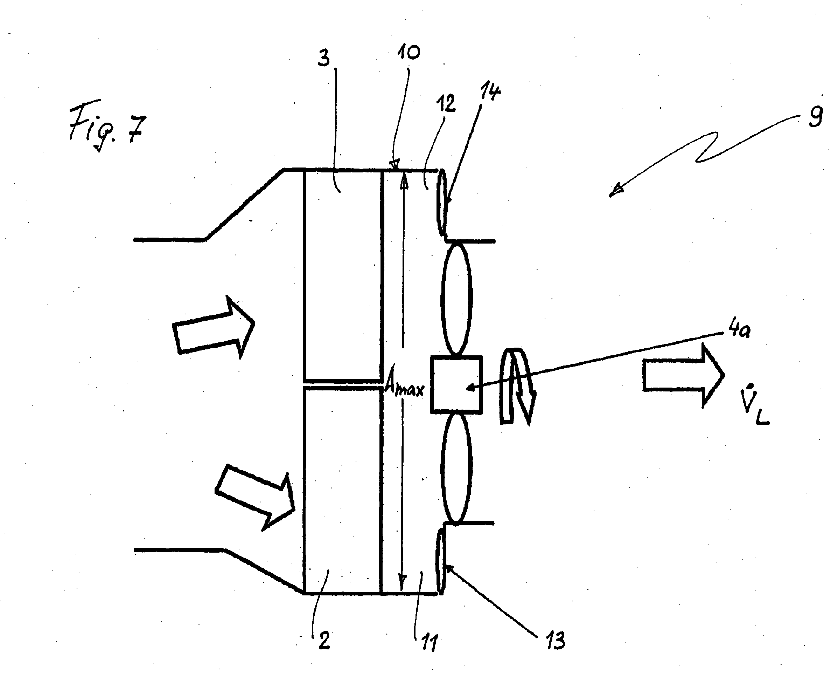

**Fig. 7** zeigt das Kühlmodul 9 mit einer geänderten Klappenkonfiguration: Die Klappen 13, 14 befinden sich beide in Schließposition, d. h die Stauluftöffnungen 11, 12 sind geschlossen, so dass die Lüfterzarge 10 ihren maximalen Ansaugquerschnitt Aₘₐₓ aufweist, welcher der stromabwärtigen Stirnfläche der beiden Wärmeübertrager 2, 3 entspricht. Diese Konfiguration ist besonders vorteilhaft bei Stillstand des Fahrzeuges, d. h. ohne Staudruck: der Lüfter 4a befindet sich im Arbeitspunkt und fördert einen maximalen Luftmassenstrom V_{L} durch beide Wärmeübertrager 2, 3 bzw. das Kühlmodul.

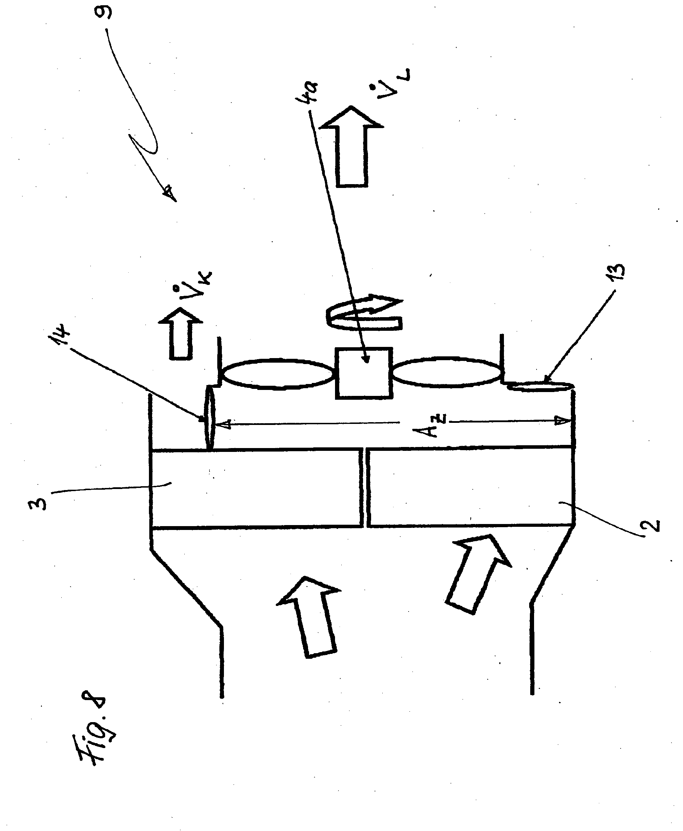

**Fig. 8** zeigt das Kühlmodul 9 mit der Klappe 13 in geschlossener und der Klappe 14 in offener Stellung, so dass die obere Stauluftöffnung 12 geöffnet ist und einen durch Staudruck induzierten Luftmassenstrom V_{K} zulässt. Der Ansaugquerschnitt A_{z} entspricht dem in Fig. 6, mit dem Unterschied, dass hier der Kühlmittelkühler 2 voll vom Lüfterstrom beaufschlagt wird. Diese Konfiguration ist vorteilhaft für Bergfahrt bei einem maximalen Luftmassenstrom durch den Kühlmittelkühler 2 und reduziertem Massenstrom durch den Ladeluftkühler 3. Der Lüfter 4a befindet sich auch hier in seinem Arbeitspunkt.

Wie die verschiedenen Klappenstellungen in den Figuren 5 bis 8 zeigen, besitzt das Kühlmodul 9 eine "variable Zargengeometrie", d. h. der Luftansaugquerschnitt und der Querschnitt der Stauluftöffnungen sind verstellbar; dabei dichten die Klappen in ihrer waagerechten Position jeweils mit ihren Vorderkanten an der Rückseite des Wärmetauschernetzes ab.

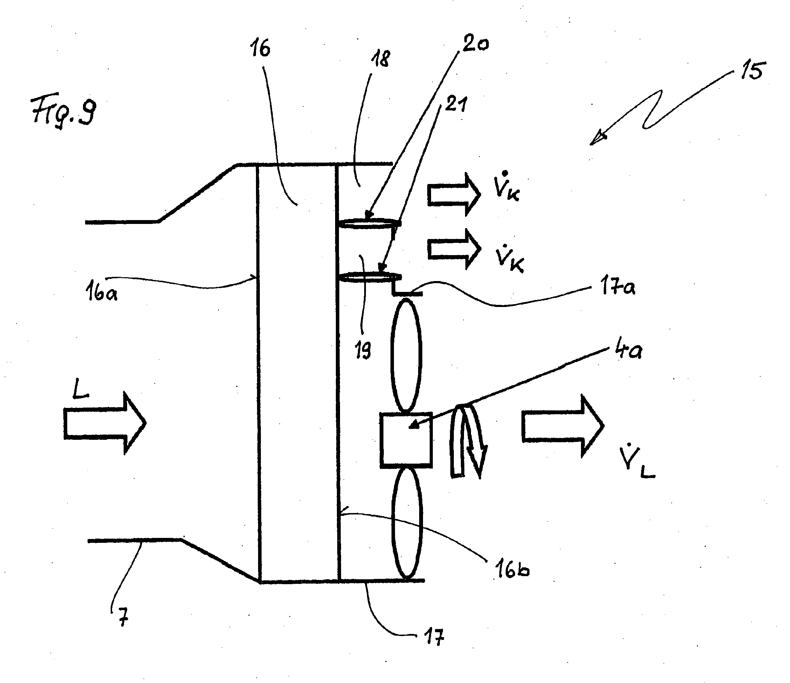

**Fig. 9** zeigt ein weiteres Beispiel nämlich ein Kühlmodul 15 mit einem Block 16 von verschiedenen, nicht näher dargestellten Wärmeübertragern, z. B. Kühlmittelkühler, Ladeluftkühler, Kältemittelkondensator, Ölkühler u. a. Der Block 16 weist eine Stirnfläche 16a auf, durch welche der Luftstrom, dargestellt durch den Pfeil L eintritt, sowie eine Luftaustrittsfläche 16b, welche der Stirnfläche 16a entspricht. Der Block 16 ist in einer Zarge 17 aufgenommen, welcher eine Rückwand 17a mit einem Lüfter 4a aufweist. Im in der Zeichnung oberen Teil der Rückwand 17a sind zwei nebeneinander angeordnete Stauluftöffnungen 18, 19 angeordnet, welche jeweils durch eine Schwenkklappe 20, 21 kontrollierbar sind. In der dargestellten waagerechten Position der Klappen 20, 21 werden die Stauluftöffnungen 18, 19 freigegeben, so dass ein Stauluftstrom, dargestellt durch die Pfeile V_{K} austritt. Die Klappen 20, 21 liegen mit ihren stromaufwärtigen Kanten an der Rückseite 16b des Blockes 16 an und bewirken somit eine Abdichtung und eine Trennung der Luftströme, welche einerseits durch den Lüfter 4a und andererseits durch den Staudruck gefördert werden. Die dargestellte Position der Klappen 20, 21 ist vorteilhaft bei Schnellfahrt und ergibt einen maximalen Luftmassenstrom durch das Kühlmodul 15, wobei sich der Lüfter 4a im Arbeitspunkt befindet.

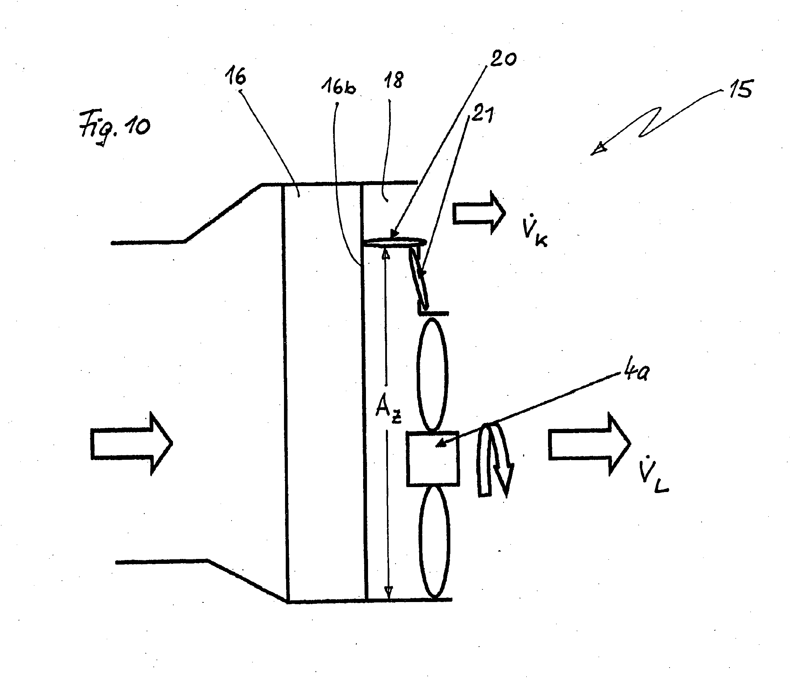

**Fig. 10** zeigt das Kühlmodul 15 gemäß Fig. 9 mit einer veränderten Klappenstellung. Die äußere Klappe 20 ist in waagerechter und die innere Klappe 21 in etwa senkrechter Stellung, so dass lediglich die äußere Stauluftöffnung 18 geöffnet ist und einen staudruckinduzierten Luftstrom V_{K} durchlässt. Der Ansaugquerschnitt des Lüfters 4a weist somit eine Zwischenstellung A_{z} auf, welche zwischen dem maximalen und dem minimalen Ansaugquerschnitt liegt. Die Klappe 20 dichtet mit ihrer Vorderkante den Ansaugstrom gegenüber der Rückseite 16b des Modulblockes 16 ab. Die dargestellte Position der Klappen ist vorteilhaft für Bergfahrt, d. h. bei geringerem Staudruck und erlaubt einen maximalen Luftmassenstrom durch das Modul 16, welcher sich aus dem Lüfterstrom V_{L} und dem Stauluftstrom V_{K} zusammensetzt.

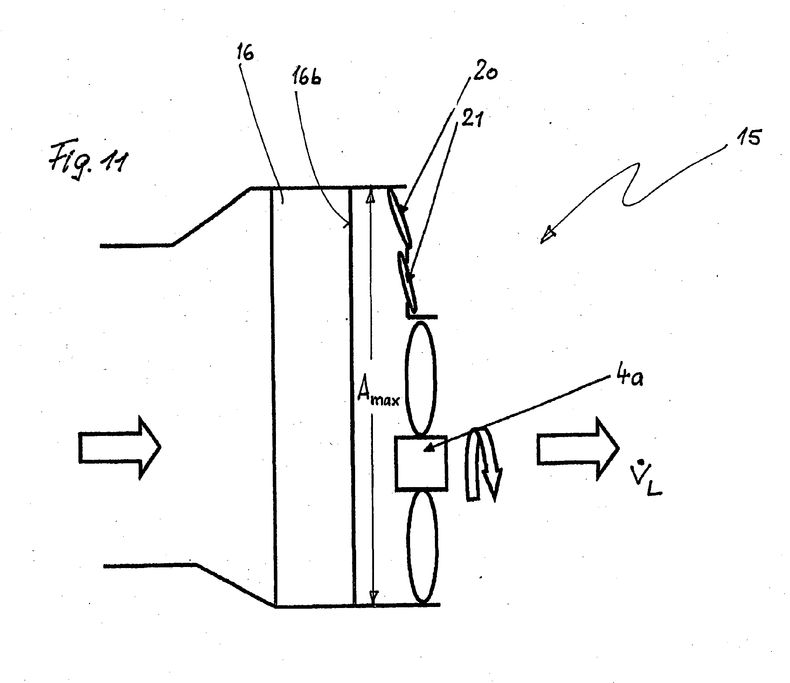

**Fig. 11** zeigt das Kühlmodul 15 mit einer dritten Klappenstellung, nämlich mit geschlossenen Klappen 20, 21. Der Ansaugquerschnitt des Lüfters 4a ist damit auf den maximalen Querschnitt Aₘₐₓ erweitert und entspricht der rückseitigen Stirnfläche 16b des Blockes 16. Die dargestellte Schließposition der Klappen 20, 21 ist vorteilhaft bei Fahrzeugstillstand, d. h. ohne Staudruck - es ergibt sich ein maximaler Luftmassenstrom V_{L} durch den Block 16, der ausschließlich vom Lüfter 4a gefördert wird. Der Lüfter 4a befindet sich im Arbeitspunkt. Die drei dargestellten Klappenpositionen gemäß Fig. 9, 10 und 11 zeigen die variable Zargengeometrie in einer stufenweisen Veränderung vom minimalen Ansaugquerschnitt Aₘᵢₙ über den Zwischenquerschnitt A_{z} bis zum maximalen Ansaugquerschnitt Aₘₐₓ. In jedem Betriebspunkt, d. h. bei Schnellfahrt, bei Bergfahrt und bei Fahrzeugstillstand arbeitet der Lüfter im Arbeitspunkt mit einem relativ hohen Wirkungsgrad.

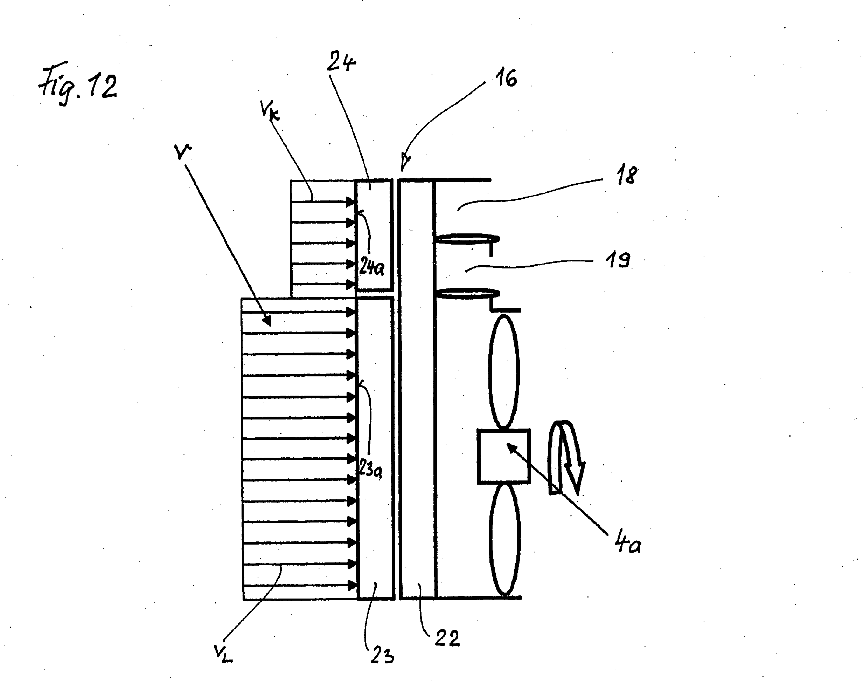

**Fig. 12** zeigt das Kühlmodul 15 mit einer Geschwindigkeitsverteilung v über der Stirnfläche des Modulblockes 16, welcher aus einem stromabwärts gelegenen Kühlmittelkühler 22, einem stromaufwärts gelegenen Ladeluftkühler 23 und einem neben dem Ladeluftkühler 23 angeordneten Motorölkühler 24 aufgebaut ist. Der Motorölkühler 24 weist eine Stirnfläche 24a und der Ladeluftkühler 23 eine Stirnfläche 23a auf. Die Stirnfläche 24a entspricht etwa dem Querschnitt der beiden Stauluftöffnungen 18, 19 und die Stirnfläche 23a dem Ansaugquerschnitt des Lüfters 4a. Die Geschwindigkeitsverteilung v über der gesamten Modulstirnfläche ist für maximale Geschwindigkeit des Fahrzeuges dargestellt. Infolge der geöffneten Stauluftöffnungen 18, 19 ergibt sich über der Stirnfläche 24a des Motorölkühlers 24 die Geschwindigkeit V_{K}, während sich über der Stirnfläche 23a des Ladeluftkühlers 23 eine erhöhte Geschwindigkeit V_{L} einstellt. Dies ist durch den Energiezuwachs bedingt, den der Massenstrom vom im Arbeitspunkt arbeitenden Lüfter 4a erhält. Der Ladeluftkühler 23 erhält somit bei Schnellfahrt, d. h. bei einer erhöhten Kühlleistungsanforderung an den Ladeluftkühler einen erhöhten Kühlluftmassenstrom. Wie aus der unterschiedlichen Geschwindigkeitsverteilung ersichtlich, erfolgt gleichzeitig eine Aufteilung der Strompfade für die beiden nebeneinander angeordneten Wärmeübertrager 23, 24, die somit hinsichtlich ihrer Kühlleistung durch einen angepassten Luftmassenstrom regelbar sind.

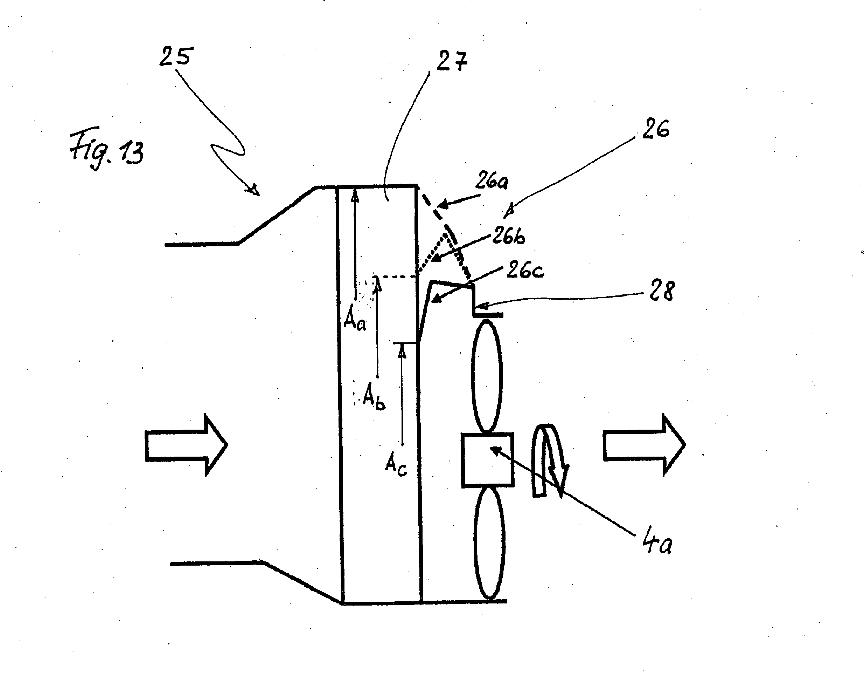

**Fig. 13** zeigt als Ausführungsbeispiel der Erfindung ein Kühlmodul 25 mit variabler Zargengeometrie in Form einer so genannten Faltklappe 26, welche in die Rückwand der Zarge integriert ist. An einen Modulblock 27 schließt eine Zargenrückwand 28 an, in welcher der Lüfter 4a umläuft. Die Faltklappe 26 ist in die Zargenrückwand 28 derart integriert, dass durch unterschiedliche Faltungen unterschiedliche Ansaugquerschnitte für den Lüfter 4a und gleichzeitig unterschiedliche Querschnitte für die Stauluftöffnungen freigegeben werden. In der Zeichnung sind drei Stellungen 26a (gestrichelt), 26b (punktiert) und 26c (durchgezogen) dargestellt. Die Stellung 26c ist durch einen minimalen Ansaugquerschnitt A_{c} für den Lüfter 4a und eine maximale Stauluftöffnung gekennzeichnet. Die Stellung 26b der Faltklappe 26 bewirkt einen mittleren Ansaugquerschnitt A_{b} und eine Stauluftöffnung von mittlerem Querschnitt. Bei der Stellung 26a ist die Zargenrückwand 28 rückwärtig völlig geschlossen, d. h. der Lüfteransaugquerschnitt Aₐ ist maximal, und der gesamte durch den Modulblock 27 angesaugte Lüfterstrom wird vom Lüfter 4a gefördert. Wie in den vorherigen Beispielen dichtet auch hier die Faltklappe 26 mit ihrer stromaufwärtigen Kante den Luftstrom an der Rückseite des Modulblockes 27 ab. Zwischen den dargestellten Positionen 26a, 26b, 26c sind Zwischenstellungen möglich, so dass insgesamt eine kontinuierliche, d. h. stufenlose Verstellung des Ansaugquerschnittes, verbunden mit einer entsprechenden Änderung der Stauluftöffnung, möglich ist. Dadurch wird für die verschiedenen Betriebspunkte, Leerlauf, Bergfahrt und Schnellfahrt sichergestellt, dass der Lüfter im Arbeitspunkt arbeitet und ein erhöhter Luftmassenstrom erzielt wird.

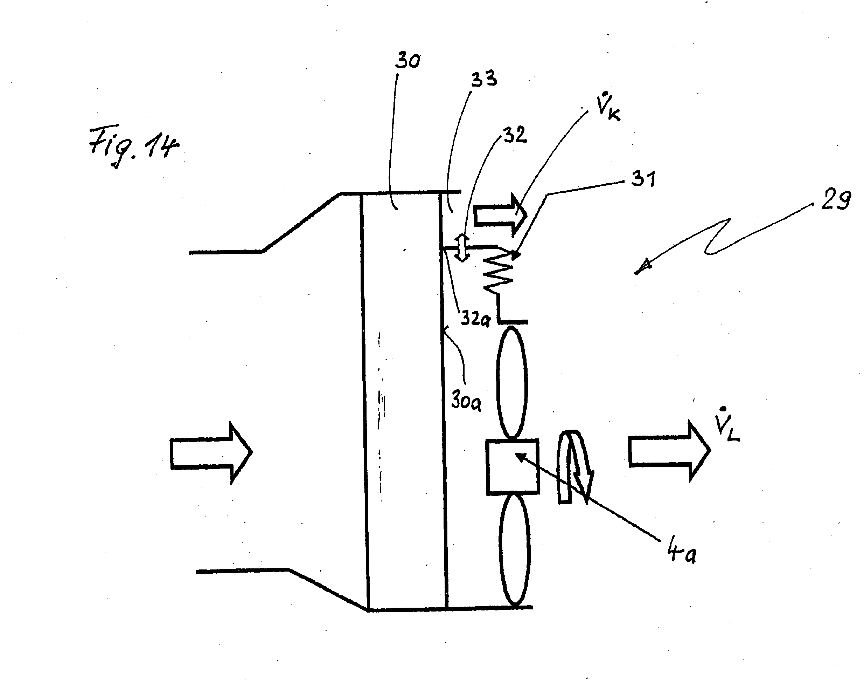

**Fig. 14** zeigt als weiteres Ausführungsbeispiel der Erfindung ein Kühlmodul 29 mit einem aus diversen, nicht dargestellten Komponenten bestehenden Modulblock 30 und einer variablen Zargengeometrie in Form einer faltbaren Rückwand 31, welche auch den Lüfter 4a aufnimmt. Die Zargenrückwand 31 ist quer zur Luftströmungsrichtung nach Art eines Faltenbalges faltbar und weist an ihrem freien Ende ein ebenfalls quer zur Luftströmungsrichtung L verschiebbares Trenn- und Dichtelement 32 auf. Das Trenn- und Dichtelement weist eine vordere Dichtkante 32a auf, welche an der Luftaustrittsfläche 30a des Modulblockes 30 gleitet und somit eine Abdichtung des vom Lüfter 4a angesaugten Luftstromes bewirkt. Außerhalb des Dicht- und Trennelementes 32, d. h. auf der dem Lüfter 4a abgewandten Seite wird eine Stauluftöffnung 33 geschaffen, die einen Stauluftstrom V'_{K} ermöglicht. Die faltbare Zargenrückwand 31 in Verbindung mit dem Dicht- und Trennelement 32 erlaubt eine stufenlose Verstellung des Lüfteransaugquerschnittes und der Stauluftöffnung 33.

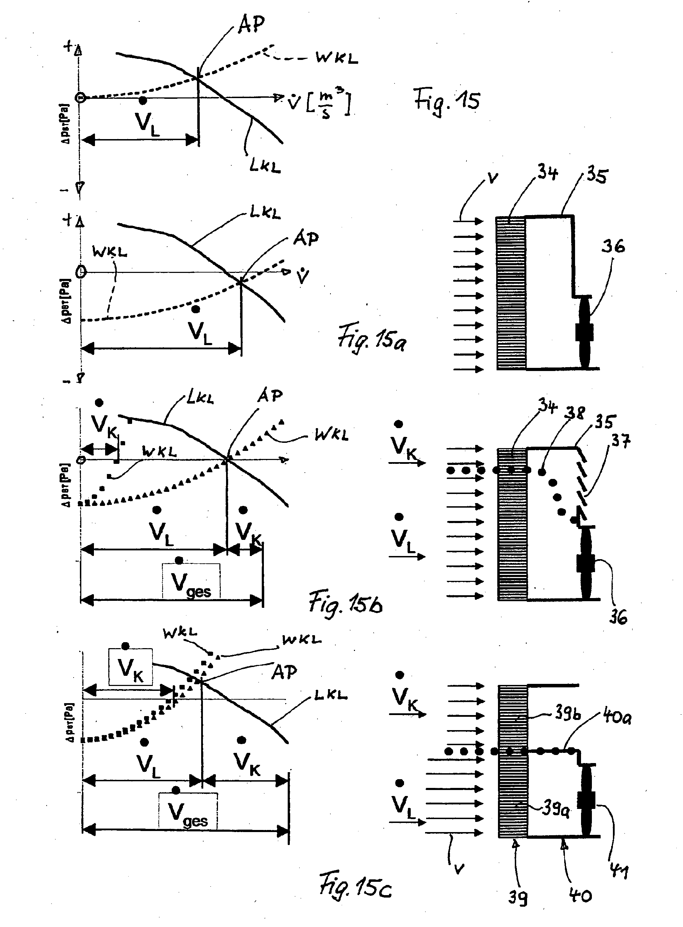

**Fig. 15** zeigt ein Diagramm mit einer Lüfterkennlinie LKL (durchgezogen) sowie einer Widerstandskennlinie WKL, wobei der statische Druck ΔPST über dem Luftmassenstrom V'_{L} aufgetragen ist. Der Schnittpunkt der Widerstandkennlinie und der Lüfterkennlinie ist der Arbeitspunkt, der mit AP bezeichnet ist. Das Diagramm zeigt eine Widerstandskennlinie ohne Staudruckunterstützung. Der Lüfter fördert im Arbeitspunkt einen Volumenstrom, der mit V'_{L} eingezeichnet ist. Gleichzeitig wird im Arbeitspunkt ein positives ΔP erzeugt.

**Fig. 15a** zeigt eine Lüfterkennlinie LKL und eine Widerstandskennlinie WKL mit Staudruckunterstützung, d. h. gegenüber Fig. 15 ist die Widerstandskennlinie WKL in den negativen Bereich abgesenkt; ebenso befindet sich der Arbeitspunkt AP im negativen Druckbereich, d. h. der Lüfter wird vom Staudruck "überblasen" und kann dem Luftmassenstrom keine Energie mehr zuführen. Die rechte Seite der Fig. 15a zeigt das entsprechende Kühlmodul mit Modulblock 34, Lüfterzarge 35 und Lüfter 36. Die Pfeile v stellen die Strömungsgeschwindigkeit der Luft im Modulblock 34 dar, d. h. eine homogene Verteilung, wenn als Vereinfachung die Strömung vom Kühler zum Lüfter als ideal verlustfrei angenommnen wird.

**Fig. 15b** zeigt eine weitere Lüfterkennlinie LKL und zwei unterschiedliche Widerstandskennlinien, dargestellt durch unterschiedliche Symbole (Quadrate und Dreiecke). Der rechte Teil der Figur 15b zeigt das zugehörige Kühlmodul mit Block 34, Zarge 35, Lüfter 36 sowie mit Staudruckklappen 37 in der Rückwand der Zarge 35. Die steilere Widerstandskennlinie WKL betrifft den Teil des Modulblockes 34, welcher vom Stauluftstrom V⁻_{K} durchströmt wird. Die flachere Widerstandskennlinie WKL betrifft den unteren Teil des Modulblockes 34, welcher vom Lüfterstrom V⁻_{L} durchströmt wird. Eine gepunktete Stromfadenlinie 38 stellt die Trennungslinie zwischen Stauluftstrom und Lüfterstrom dar. Es ergibt sich ein Gesamtluftmassenstrom V⁻_{ges} = V⁻_{L} + V⁻_{K}. Der Lüfterstrom und der Stauluftstrom addieren sich somit zum Gesamtstrom. Der Schnittpunkt der flacheren Widerstandskennlinie WKL mit der Lüfterkennlinie, d. h. der Arbeitspunkt AP liegt bei einem statischen Druck von 0, d. h. der Lüfter fügt dem Luftstrom keine Energie zu. Die Figuren 15, 15a, 15b beschreiben den bekannten Stand der Technik.

**Fig. 15c** zeigt demgegenüber die Wirkungsweise der Erfindung für einen Modulblock 39, an welchen eine Zarge 40 mit variabler Geometrie anschließt, d. h. mit einem für den Lüfter 41 verstellbaren Ansaugquerschnitt. Der Modulblock 39 ist durch ein Trenn- und Dichtelement 40a der Zarge 40 in zwei Teilblöcke, einen unteren Teilblock 39a und einen oberen Teilblock 39b unterteilt und rückwärtig abgedichtet. Der Teilblock 39a wird von einem Lüfterstrom V^{'}_{L} durchströmt, welcher, unterstützt vom Staudruck, durch den Lüfter 41 gefördert wird. Der obere Teilblock 39b wird durch einen staudruckinduzierten Bypassstrom V^{'}_{K} durchströmt, wobei sich, dargestellt durch die unterschiedliche Länge der Pfeile v, eine geringere Strömungsgeschwindigkeit für den Teilblock 39b als für den Teilblock 39a ergibt. Das in der Fig. 15c links angeordnete Diagramm zeigt eine Lüfterkennlinie LKL sowie zwei etwas differierende Widerstandskennlinien WKL, die obere (Quadrate) gilt für den oberen Teilblock 39b und die untere Widerstandskennlinie (Dreiecke) für den unteren Teilblock 39a. Der entsprechende Schnittpunkt mit der Lüfterkennlinie LKL ist der Arbeitspunkt AP des Lüfters 41, der einen Lüfterstrom V⁻_{L} erzeugt. Aus dem Diagramm ist ersichtlich, dass der Arbeitspunkt AP im positiven Druckbereich liegt, d. h. der Lüfter führt der Strömung Energie zu. Bedingt durch den Staudruck des Fahrzeuges, ergibt sich für den oberen Teilblock 39b der Bypassstrom V⁻_{K} als Schnittpunkt der oberen Widerstandskennlinie WKL mit der Abszisse (ΔP = 0). Beide Massenströme V⁻_{K} und V⁻_{L} addieren sich zu einem Gesamtluftmassenstrom V⁻_{ges}, welcher größer ist als der Gesamtstrom beim Stand der Technik, wie er in Fig. 15b als Vergleich dargestellt ist. Durch die erfindungsgemäße variable Zargengeometrie kann eine Anpassung des Kühlmoduls an die jeweiligen Betriebsverhältnisse (Leerlauf, Bergfahrt, Schnellfahrt) in der Weise erreicht werden, dass der Lüfter im Arbeitspunkt arbeitet und gleichzeitig eine Erhöhung des Gesamtmassenstromes stattfindet.

## Patentansprüche

1. Anordnung zur Kühlung einer Brennkraftmaschine eines Kraftfahrzeuges, insbesondere Kühlmodul (1), bestehend aus einer
- Luftleiteinrichtung (7, 6) zur Luftführung mit einem Gesamtströmungsquerschnitt,
- mindestens einem Wärmeübertrager (2, 3) zur Kühlung eines Fluidstromes,
- einer Luftfördereinrichtung (4, 4a, 4b) sowie
- einer im Luftstrom angeordneten Einrichtung zur Regelung des Luftmassenstromes (Luftregeleinrichtung),
wobei der Luftmassenstrom in mindestens einem Teilquerschnitt des Gesamtströmungsquerschnittes durch die Luftregeleinrichtung regelbar ist und die Luftleiteinrichtung eine Zarge (10, 17) mit variablem Ansaugquerschnitt aufweist, weicher zwischen einem Maximum (Aₘₐₓ) und einem Minimum (Aₘᵢₙ) veränderbar ist, und dass die Differenzfläche zwischen maximalem und minimalem Ansaugquerschnitt zumindest teilweise als Stauluftöffnung (11, 12, 18, 19) nutzbar ist, wobei die Zarge (10, 17) mindestens eine Klappe (13, 14; 20, 21; 26) zur Verstellung des Ansaugquerschnittes aufweist, **dadurch gekennzeichnet, dass** die mindestens eine Klappe (13, 14; 20, 21) schwenkbar in der Rückwand (10a, 17a) der Zarge (10, 17) angeordnet ist und mindestens zwei Klappen (13, 14; 20, 21) vorgesehen sind, die unabhängig voneinander, insbesondere nacheinander verschwenkbar sind oder die mindestens eine Klappe als Faltklappe (26, 26a, 26b, 26c) ausgebildet und in die Rückwand (28) der Zarge integriert ist, wobei die Zarge eine faltbare Rückwand (31) mit einem verschiebbaren Trenn- und Dichtelement (32) aufweist, welches den Ansaugquerschnitt begrenzt und den Ansaugstrom abdichtet.

2. Anordnung nach Anspruch 1, **dadurch gekennzeichnet, dass** mindestens zwei Wärmeübertrager (2, 3; 23, 24) im Luftstrom nebeneinander angeordnet und parallel vom Luftstrom beaufschlagbar sind.

3. Anordnung nach Anspruch 1 und 2, **dadurch gekennzeichnet, dass** dem Teilquerschnitt ein Teilluftstrom zugeordnet ist, durch welchen ein Wärmeübertrager (2; 24) beaufschlagbar ist.

4. Anordnung nach Anspruch 3, **dadurch gekennzeichnet, dass** der Teilluftstrom durch eine in Luftströmungsrichtung verlaufende Trennwand abteilbar ist.

5. Anordnung nach einem der Ansprüche 1 bis 4, **dadurch gekennzeichnet, dass** die Luftregeleinrichtung in Luftströmungsrichtung vor den Wärmeübertragern (2, 3) angeordnet ist.

6. Anordnung nach einem der Ansprüche 1 bis 4, **dadurch gekennzeichnet, dass** die Luftregeleinrichtung (5) in Luftströmungsrichtung hinter dem Wärmeübertrager (2) angeordnet ist.

7. Anordnung nach Anspruch 1, **dadurch gekennzeichnet, dass** in der Zarge (6) ein Kühlluftgebläse (4) angeordnet ist.

8. Anordnung nach Anspruch 1, **dadurch gekennzeichnet, dass** einer der Wärmeübertrager als Kühlmittelkühler (2) zur Kühlung einer Brennkraftmaschine ausgebildet ist.

9. Anordnung nach Anspruch 1, **dadurch gekennzeichnet, dass** einer der Wärmeübertrager als Ladeluftkühler (3) ausgebildet ist.

10. Anordnung nach Anspruch 1, **dadurch gekennzeichnet, dass** der Ansaugquerschnitt in Stufen veränderbar ist.

11. Anordnung nach Anspruch 1, **dadurch gekennzeichnet, dass** der Ansaugquerschnitt stufenlos veränderbar ist.

12. Anordnung nach Anspruch 1, **dadurch gekennzeichnet, dass** die mindestens eine Klappe (13, 14; 20, 21) in den äußeren Bereichen der Zargenrückwand (10a, 17a) angeordnet ist.

13. Anordnung nach einem der vorhergehenden Ansprüche, **dadurch gekennzeichnet, dass** der vom Lüfter (4a) hinter den Wärmeübertragern (2, 3; 16; 27) ansaugbare Luftstrom durch die mindestens eine Klappe (13, 14; 20, 21; 26) gegenüber den Wärmeübertragern (2, 3; 16, 16b; 27) abdichtbar ist.

## Claims

1. An arrangement for cooling an internal combustion engine of a motor vehicle, in particular a cooling module (1), comprising:
- an air-deflecting device (7, 6) for guiding air, having at least one overall flow cross-section;
- at least one heat exchanger (2, 3) for cooling a fluid flow;
- an air supply device (4, 4a, 4b); and
- a device arranged in the air flow for controlling the air mass flow (air control device);
the air mass flow in at least one partial cross-section of the overall flow cross-section being controllable by the air control device, and the air-deflecting device comprising a frame (10, 17) having a variable intake cross-section, which can be varied between a maximum (Amax) and a minimum (Amin), and the surface differential between the maximum and minimum intake cross-sections being usable at least in part as a ram air opening (11, 12, 18, 19), the frame (10, 17) comprising at least one flap (13, 14; 20, 21; 26) for adjusting the intake cross-section, **characterized in that** the at least one flap (13, 14; 20, 21) is pivotably arranged in the back wall (10a, 17a) of the frame (10, 17) and at least two flaps (13, 14; 20, 21) are provided, which can be pivoted independently of each other, in particular consecutively, or the at least one flap is designed as a folding flap (26, 26a, 26b, 26c) and integrated in the back wall (28) of the frame, wherein the frame comprises a folding back wall (31) having a displaceable separating and sealing element (32), which delimits the intake cross-section and seals the intake flow.

2. The arrangement according to claim 1, **characterized in that** at least two heat exchangers (2, 3; 23, 24) are arranged next to each other in the air flow and the air flow can be supplied to them in a parallel manner.

3. An arrangement according to claims 1 and 2, **characterized in that** a partial air flow, which can be supplied to a heat exchanger (2; 24), is associated with the partial cross-section.

4. The arrangement according to claim 3, **characterized in that** the partial air flow can be partitioned by a partition extending in the air flow direction.

5. A arrangement according to any one of claims 1 to 4, **characterized in that** the air control device is arranged upstream of the heat exchangers (2, 3) in the air flow direction.

6. An arrangement according to any one of claims 1 to 4, **characterized in that** the air control device (5) is arranged downstream of the heat exchanger (2) in the air flow direction.

7. The arrangement according to claim 1, **characterized in that** a cooling air fan (4) is arranged in the frame (6).

8. The arrangement according to claim 1, **characterized in that** one of the heat exchangers is designed as a coolant cooler (2) for cooling an internal combustion engine.

9. The arrangement according to claim 1, **characterized in that** one of the heat exchangers is designed as a charge air cooler (3).

10. The arrangement according to claim 1, **characterized in that** the intake cross-section can be varied in stages.

11. The arrangement according to claim 1, **characterized in that** the intake cross-section can be continuously varied.

12. The arrangement according to claim 1, **characterized in that** the at least one flap (13, 14; 20, 21) is arranged in the outer regions of the frame back wall (10a, 17a).

13. An arrangement according to any one of the preceding claims, **characterized in that** the air flow, which can be taken in by the fan (4a) downstream of the heat exchangers (2, 3; 16; 27), can be sealed with respect to the heat exchangers (2, 3; 16, 16b; 27) by the at least one flap (13, 14; 20, 21; 26).

## Revendications

1. Agencement pour le refroidissement d'un moteur à combustion interne d'un véhicule automobile, en particulier module de refroidissement (1), se composant
- d'un dispositif déflecteur d'air (7, 6) servant au guidage de l'air et ayant une section d'écoulement d'ensemble,
- d'au moins un échangeur de chaleur (2, 3) servant au refroidissement d'un flux de fluide,
- d'un dispositif de transport d'air (4, 4a, 4b), ainsi
- que d'un dispositif disposé dans le flux d'air et servant à la régulation du flux de masse d'air (dispositif de régulation d'air),
où le flux de masse d'air en circulation dans au moins une section partielle de la section d'écoulement d'ensemble est réglable par le dispositif de régulation d'air, et le dispositif déflecteur d'air présente un cadre (10, 17) ayant une section d'aspiration variable, section d'aspiration qui est modifiable entre un maximum (Aₘₐₓ) et un minimum (Aₘᵢₙ), et où la surface de différence entre la section d'aspiration maximale et minimale est utilisable au moins partiellement comme ouverture d'air dynamique (11, 12, 18, 19), où le cadre (10, 17) présente au moins un volet (13, 14; 20, 21; 26) servant au réglage de la section d'aspiration, **caractérisé en ce que** le volet (13, 14; 20, 21) au moins au nombre de un est disposé en étant orientable dans la paroi arrière (10a, 17a) du cadre (10, 17), et il est prévu au moins deux volets (13, 14; 20, 21) qui peuvent pivoter indépendamment l'un de l'autre, en particulier l'un après l'autre, ou bien le volet au moins au nombre de un est conçu comme un volet pliant (26, 26a, 26b, 26c) et est intégré dans la paroi arrière (28) du cadre, où le cadre présente une paroi arrière pliable (31) comprenant un élément de séparation et d'étanchéité mobile (32) qui délimite la section d'aspiration et assure l'étanchéité du flux d'aspiration.

2. Agencement selon la revendication 1, **caractérisé en ce qu'**au moins deux échangeurs de chaleur (2, 3; 23, 24) sont disposés l'un à côté de l'autre dans le flux d'air et peuvent être alimentés parallèlement par le flux d'air.

3. Agencement selon la revendication 1 ou 2, **caractérisé en ce qu'**un flux d'air partiel est associé à la section partielle, flux d'air partiel par lequel peut être alimenté un échangeur de chaleur (2; 24).

4. Agencement selon la revendication 3, **caractérisé en ce que** le flux d'air partiel peut être divisé par une paroi de séparation s'étendant dans la direction d'écoulement de l'air.

5. Agencement selon l'une quelconque des revendications 1 à 4, **caractérisé en ce que** le dispositif de régulation d'air est disposé, dans la direction d'écoulement de l'air, devant les échangeurs de chaleur (2, 3).

6. Agencement selon l'une quelconque des revendications 1 à 4, **caractérisé en ce que** le dispositif de régulation d'air (5) est disposé, dans la direction d'écoulement de l'air, derrière l'échangeur de chaleur (2).

7. Agencement selon la revendication 1, **caractérisé en ce qu'**un pulseur d'air de refroidissement (4) est disposé dans le cadre (6).

8. Agencement selon la revendication 1, **caractérisé en ce que** l'un des échangeurs de chaleur est conçu comme un radiateur à liquide de refroidissement (2) servant au refroidissement d'un moteur à combustion interne.

9. Agencement selon la revendication 1, **caractérisé en ce que** l'un des échangeurs de chaleur est conçu comme un refroidisseur d'air de suralimentation (3).

10. Agencement selon la revendication 1, **caractérisé en ce que** la section d'aspiration est modifiable par paliers.

11. Agencement selon la revendication 1, **caractérisé en ce que** la section d'aspiration est modifiable en continu.

12. Agencement selon la revendication 1, **caractérisé en ce que** le volet (13, 14; 20, 21) au moins au nombre de un est disposé dans les zones extérieures de la paroi arrière (10a, 17a) du cadre.

13. Agencement selon l'une quelconque des revendications précédentes, **caractérisé en ce que** le flux d'air pouvant être aspiré par le ventilateur (4a) placé derrière les échangeurs de chaleur (2, 3; 16; 27) peut être rendu étanche par rapport aux échangeurs de chaleur (2, 3; 16, 16b; 27), par le volet (13, 14; 20, 21; 26) au moins au nombre de un.
